# EUROPÄISCHE PATENTANMELDUNG

(11) **EP 0 849 538 A2**
(43) Veröffentlichungstag der Anmeldung: **24.06.1998**
(21) Anmeldenummer: 97122672.5
(22) Anmeldetag: 22.12.1997
(51) Int. Cl.: F24C 15/34

(54) **Formteile aus Mineralwolle-Nadelfilz**

(30) Priorität: 20.12.1996 DE 29622196 U
(71) Anmelder: ISOVER SAINT-GOBAIN, 92400 Courbevoie (FR)
(72) Erfinder: Sommer, Rolf, 67126 Dannstadt (DE)
(74) Vertreter: Herrmann-Trentepohl, Werner, Dipl.-Ing.

(57) **Zusammenfassung**

Bei einem Mineralwolleformteil zur Schall- und/oder Wärmedämmung von mit Vorsprüngen versehenen oder unregelmäßigen Flächen, insbesondere von wärmeabstrahlenden Geräten, wie etwa Herdrückwände und dgl., wobei die zur Aufnahme der vorspringenden Elemente der zu dämmenden Bauteile bestimmten Bereiche des Mineralwolle-Formteiles durch Einschnitte im Mineralwolle-Formteil freigestellt sind, sind die durch Einschnitte in dem Mineralwolleformteil freigestellten Teilbereiche derart vorkomprimiert, daß vorgeformte Ausnehmungen in der Oberfläche des Mineralwolleformteiles gebildet sind.

## Beschreibung

Die vorliegende Erfindung bezieht sich auf Formteile aus Mineralwolle-Nadelfilz entsprechend dem Oberbegriff des Patentanspruches 1, wobei unter Mineralwolle ein Material zu verstehen ist, das aus gängigen Mineralfasern hergestellt ist.

Formteile aus Mineralwolle eignen sich für eine große Vielzahl von Anwendungsgebieten, wie z.B. der Schalldämmung und der Wärmedämmung. Insbesondere bei Haushaltsgeräten, wie Backöfen, Kühlschränken, Waschmaschinen, Trocknern und ähnlichem ist es notwendig, die jeweiligen Arbeitsräume gegen eine Schall- oder Wärmeabstrahlung nach außen zu schützen. So muß beispielsweise die Backröhre eines Herdes rundum wärmegedämmt sein, um einen Energieverlust, aber auch eine Aufheizung der Umgebung des Herdes zu reduzieren und in der Backröhre gleichmäßige Temperaturen zu erzielen, damit das Backgut z.B. an jeder Stelle gleiche Bräune erhält.

Die Problematik, die bei der Schall- oder Wärmedämmung von Haushaltsgeräten oder ähnlichen Einrichtungen immer wieder auftaucht, ist, daß die Arbeitsräume an Ihrer Außenseite in der Regel mit nach außen vorstehenden Aggregaten, Schaltelementen, Motoren und ähnlichem versehen sind.

Zur Schall- oder Wärmedämmung dieser unebenen Flächen oder komplizierten Körper ist bei herkömmlichem Dämmaterial ein erheblicher Aufwand erforderlich, um die Innenfläche dieser Produkte an die unebene Kontur der zu dämmenden Anlagefläche anzupassen. Um diesem Problem zu begegnen, hat man daher häufig entweder mit mehrlagigen Dämmschichten gearbeitet, in die entsprechende Aussparungen eingearbeitet sind, oder durch Fräsen entsprechende Ausnehmungen in einfache Mineralwolleformteile eingebracht. Eine andere Lösung besteht darin, Formteile als Pressteile herzustellen, was aber wiederum erhebliche Formkosten verursacht sowie hohe Kosten infolge hoher Rochdichten und Bindemittelmengen zur Stabilisierung derartiger Formteile. Die Ausbildung von Aussparungen zur Formanpassung durch Entfernen von Mineralwollematerial an den Stellen der gewünschten Vertiefungen beispielsweise durch Fräsen, verursacht einen Materialverlust und somit auch einen Dämmverlust. Hinzu kommt die Abfallintensität während des Herstellungsprozesses und nicht zu letzt ein erheblicher zusätzlicher Arbeitsaufwand. Dies führt aber wiederum zu Kostensteigerungen, die sich unvorteilhaft auf die Serienherstellung, beispielsweise von Haushaltsgeräten auswirken.

Aus dem Dokument DE-PS 32 35 294 ist in Annäherung an die oben beschriebene Problematik ein Mineralwolledämmkörper mit einer vorgegebenen Außenkontur und einer an die abweichende Kontur einer Anlagefläche angepaßten Innenkontur offenbart, wobei der beschriebene Mineralwolledämmkörper auf der Innenkontur mit einem die Grundfläche der Kontur der Anlagefläche annähernd begrenzenden durchlaufenden Einschnitt versehen ist, der von der Oberfläche der Innenkontur aus bis wenigstens in die ungefähre Tiefe der von der Kontur der Anlagefläche im Einbauzustand benötigten Vertiefungen im Mineralfasermaterial geführt ist.

Trotz der unbestreitbaren Vorteile, die die Lösung nach Maßgabe dieses Dokumentes bietet, hat es sich im Laufe der Benutzung entsprechend ausgebildeter Mineralwollekörper als nachteilig erwiesen, daß der zur Komprimierung der durch die Einschnitte entkoppelten Bereiche erforderliche Druck erst beim Einbau der Mineralwolleformteile durch die entsprechenden aufzunehmenden Vorsprünge oder Unregelmäßigkeiten auf der Anlagefläche des zu isolierenden Körpers aufgebracht wird. Insbesondere läßt sich dadurch häufig nicht eine gewünschte exakte und kontrollierte Einbettung der Bauteile erzielen.

Entsprechende Einbauverhältnisse, die eine zuverlässige Komprimierung ermöglichen, sind jedoch nicht in jedem Falle gegeben. Darüber hinaus hat es sich auch als nachteilig erwiesen, daß die erforderliche Einbaupositionierung der Mineralwolleformteile anhand der Einschnitte nur schwer zu erkennen ist, was eine Verzögerung beim Zusammenbau zur Folge hat. Dieser Nachteil ist vor allem bei Nadelfilzen ohne chemische Bindung gegeben, denn darin sind bloße Einschnitte fast unsichtbar.

Die Aufgabe der vorliegenden Erfindung ist es, Mineralwolleformteile vorzusehen, deren Einbauposition bezüglich der zu dämmenden Fläche einfach und schnell zu erkennen ist und deren zur Aufnahme der Vorsprünge auf der zu dämmenden Fläche vorgesehenen Bereiche unabhängig von einem durch die aufzunehmenden Teile aufgebrachten Druck sind.

Diese Aufgabe wird durch die kennzeichnenden Merkmale des Patentanspruches 1 gelöst, wobei zweckmäßige Ausführungsformen durch die Merkmale der Unteransprüche gekennzeichnet sind.

Vorgesehen sind vorzugsweise aus Mineralwolle-Nadelfilzen hergestellte Formteile, deren für die Bildung einer Vertiefung vorgesehenen Materialbereiche durch einen oder mehrere Einschnitte gegenüber dem Umgebungsmaterial über die Tiefe der vorgesehenen Vertiefung freigestellt sind. In völliger Abkehr von den bekannten Mineralwolleformteilen sind nach Maßgabe der vorliegenden Erfindung die durch die Einschnitte freigestellten Teilbereiche bereits während der Produktion komprimiert, so daß das fertige Mineralwolle-Nadelfilzformteil bei Fertigstellung bereits mit Ausnehmungen versehen ist, die bei der Montage an Backöfen, Kühlschränken oder anderen Geräten sowohl eine einfache und direkte Feststellung der notwendigen Montageposition als auch eine problemlose Aufnahme der über die zu dämmende Fläche vorstehenden Installationen des jeweiligen Gerätes ermöglicht. Die Komprimierung der durch die Einschnitte im Grundmaterial freigestellten Teilbereiche ist dabei derart, daß das komprimierte Material nach der Komprimierung mit einer Restelastizität versehen ist, beispielsweise um trotz möglicher gestalterischer Änderungen der über die zu isolierenden Fläche vorstehenden Elemente eine problemlose Anpassung der Formteile aus Mineralwolle-Nadelfilz.

Die durch Komprimierung der durch Einschnitte im Mineralwolleformteil freigestellten Bereiche ist vorzugsweise mit Stanzwerkzeugen durchgeführt, die in den Teilbereichen, wo Komprimierung erzielt werden soll, mit harten Einlagen versehen sind, wobei die Stanzwerkzeuge gleichzeitig mit gegenüber herkömmlichen Stanzwerkzeugen kürzeren Messern versehen sein können. Die mit diesen Werkzeugen hergestellten Teile haben an den Stellen des Einsatzes der Stanzwerkzeuge wie oben beschrieben Eindrücke.

Mit Mineralwolle-Nadelfilzformteilen entsprechend der vorliegenden Erfindung ist es möglich, gegenüber herkömmlichen Produkten einen positiven wirtschaftlichen Nutzen bei der Produktion zu erzielen, da beispielsweise zweilagige Dämmschichten vermieden oder abgelöst werden können. Ebenso können Engpässe bei der Herstellung von bekannten Mineralwolleformteilen, bei denen Ausnehmungen z.B. gefräst werden, vermieden werden, da durch das erfindungsgemäße Mineralwolleformteil die bisher erforderliche manuelle Trennung der Sollteile vom Abfall unterbleiben kann.

Weitere Vorteile und Merkmale der Erfindung ergeben sich aus den beigefügten Zeichnungen. Darin zeigt:
- Fig. 1: ein mit Einschnitten versehenes Mineralwolleformteil;
- Fig. 2: das mit Einschnitten versehene Mineralwolleformteil nach Fig. 1, mit komprimiertem freigestellten Bereich; und
- Fig. 3: das Mineralwolleformteil nach Fig. 1 und 2 im montierten Zustand.

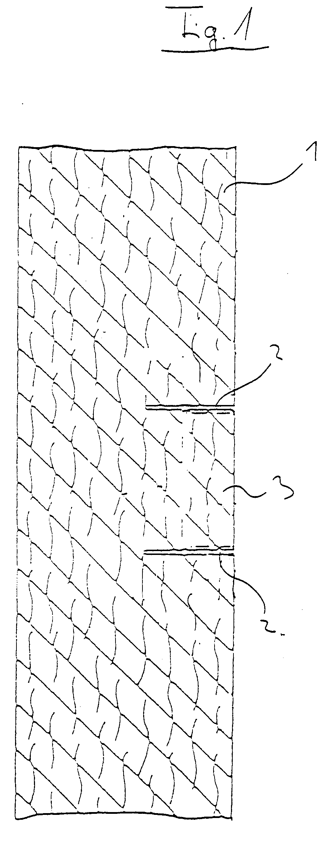

In der Fig. 1 ist ein Mineralwolleformteil 1 dargestellt, welches in der gezeigten Ausführungsform aus Mineralwolle-Nadelfilz besteht, jedoch auch aus jedem anderen Mineralwollefasermaterial gemacht sein kann. Der Bereich des Mineralwolleformteiles 1, welcher für die Aufnahme von über zu dämmende Fläche vorstehende Elemente vorgesehen ist, ist durch Einschnitte 2 freigestellt, die bevorzugterweise tiefer ausgeführt sind als das aufzunehmende Element, welches über die zu isolierende Fläche vorspringt. Der durch die Einschnitte 2 freigestellte Teilbereich des Mineralwolleformkörpers 1 ist mit Bezugsziffer 3 bezeichnet.

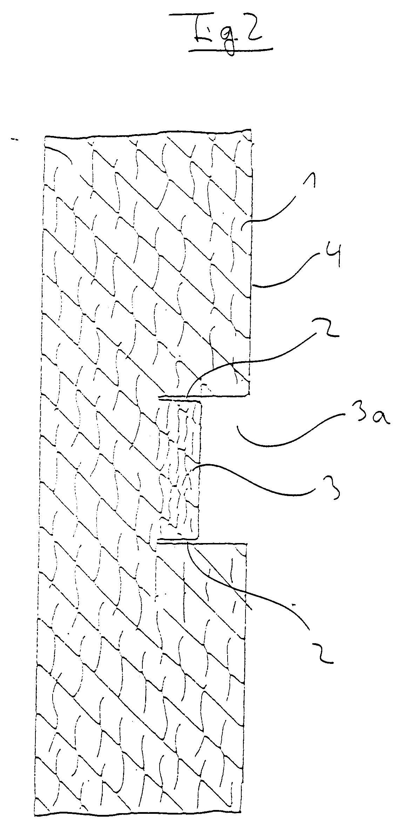

Die Fig. 2 zeigt den Mineralwolleformkörper 1 entsprechend Fig. 1, wobei der durch die Einschnitte 2 freigestellte Teilbereich 3 auf eine vorbestimmte Tiefe komprimiert ist, so daß sich in der zur Anlage an das zu dämmende Bauteil vorgesehenen Fläche 4 des Mineralwolleformkörpers 1 eine entsprechende Ausnehmung 3a ergibt.

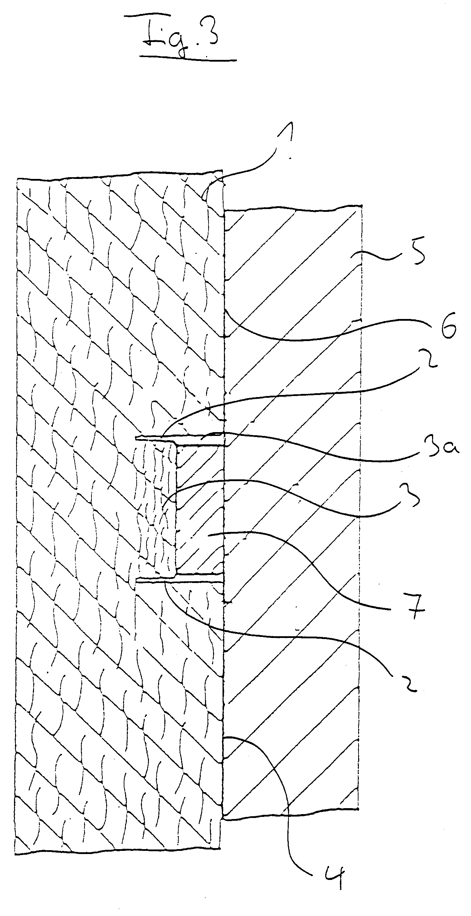

Aus der Fig. 3 ist schließlich der Mineralwolleformkörper nach Fig. 1 und 2 in einem an einem zu isolierenden Bauteil 5 montierten Zustand ersichtlich. Auf der zu isolierenden Fläche 6 des Bauteiles 5 ist im Bereich der Ausnehmung 3a des Mineralwollekörpers 1 ein über die zu dämmende Fläche 6 vorstehendes Element 7 zu erkennen, bei dem es sich z.B. um ein Anbauaggregat handeln kann, das für den Betrieb des Gerätes notwendig ist, zu dem das zu isolierende Wandelement 5 gehört. Das über die zu isolierende Fläche 6 vorstehende Element 7 paßt wie ersichtlich in die Ausnehmung 3a, welche durch die Einschnitte 2 und die Komprimierung des durch die Einschnitte 2 freigestellten Bereiches 3 gebildet ist.

Durch das oben beschriebene Mineralwolle-Formteil erreicht man auf einfache und vorteilhafte Art und Weise, daß die Positionierung des Mineralwolle-Formteiles auf mit Vorsprüngen versehenen zu isolierenden Flächen von Backöfen, Kühlschränken, etc. kein großer Aufwand betrieben werden muß, da sich die Positionierung von vorneherein aus der Anordnung der bereits vorkomprimierten durch Einschnitte begrenzten Teilbereiche ergibt. Darüber hinaus vermeidet man mit den oben beschriebenen Mineralwolleformteilen aber auch, daß von den aufzunehmenden über die zu isolierende Fläche vorspringenden Elementen kein Druck zur Komprimierung der durch die Einschnitte freigestellten Teilbereiche notwendig ist. Durch die Mineralwolleformteile wie oben beschrieben, ergeben sich daher sowohl Herstellungsvorteile als auch Vorteile bei der Montage an den zu isolierenden Bauteilen.

## Patentansprüche

1. Mineralwolleformteil zur Schall- und/oder Wärmedämmung von mit Vorsprüngen versehenen oder unregelmäßigen Flächen, insbesondere von wärmeabstrahlenden Geräten, wie etwa Herdrückwände und dgl., wobei die zur Aufnahme der vorspringenden Elemente der zu dämmenden Bauteile bestimmten Bereiche des Mineralwolle-Formteiles durch Einschnitte im Mineralwolle-Formteil freigestellt sind, **dadurch gekennzeichnet, daß** die durch Einschnitte (2) in dem Mineralwolleformteil (1) freigestellten Teilbereiche (3) derart vorkomprimiert sind, daß vorgeformte Ausnehmungen (3a) in der Oberfläche (4) des Mineralwolleformteiles (1) gebildet sind.

2. Mineralwolleformteil, **dadurch gekennzeichnet, daß** die vorgeformten Ausnehmungen (3a) der Kontur der vorspringenden Elemente angepaßt sind.

3. Mineralwolleformteil nach Anspruch 1, **dadurch gekennzeichnet, daß** das Mineralwolleformteil (1) aus Mineralwolle-Nadelfilz gebildet ist.

4. Mineralwolleformteil nach Anspruch 1 oder 2, **dadurch gekennzeichnet, daß** die Einschnitte (2) sowie die Komprimierung des freigestellten Teilbereiches (3) in einem Arbeitsgang ausgeführt sind.

5. Mineralwolleformteil nach einem der vorhergehenden Ansprüche, **dadurch gekennzeichnet, daß** die Einschnitte (2) tiefer als die Erstreckung der über die zu dämmende Fläche (6) vorspringende Elemente (7) sind.

6. Mineralwolleformteil nach einem der vorhergehenden Ansprüche, **dadurch gekennzeichnet, daß** die durch die Einschritte (2) freigestellten und komprimierten Teilbereiche (3) des Mineralwolleformteiles (1) mit einer eine Nachkompression ermöglichenden Restelastizität versehen sind.

7. Mineralwolleformteil nach einem der vorhergehenden Ansprüche, **dadurch gekennzeichnet, daß** die Einschnitte (2) durch Stanzen und die Bildung der vorgeformten Ausnehmungen durch Druckstempel erzeugt sind.
